## Europäisches Patentamt

## European Patent Office

## Office européen des brevets

(19)

(11) Veröffentlichungsnummer: **0 069 856**
**B2**

(12) # NEUE EUROPÄISCHE PATENTSCHRIFT

(45) Veröffentlichungstag der neuen Patentschrift:
**06.04.88**

(51) Int. Cl.⁴: **H 04 N 9/64**

(21) Anmeldenummer: **82104796.6**

(22) Anmeldetag: **01.06.82**

(54) **Verfahren und Anordnung zur Regelung des digitalen Chrominanzsignales eines Farbfernsehempfängers.**

(30) Priorität: **10.06.81 DE 3123038**

(43) Veröffentlichungstag der Anmeldung:
**19.01.83 Patentblatt 83/3**

(45) Bekanntmachung des Hinweises auf die Patenterteilung:
**26.09.84 Patentblatt 84/39**

(45) Bekanntmachung des Hinweises auf die Entscheidung über den Einspruch:
**06.04.88 Patentblatt 88/14**

(84) Benannte Vertragsstaaten:
**DE FR GB IT**

(56) Entgegenhaltungen:
**FR-A-2 137 593**
**US-A-3 541 237**

(73) Patentinhaber: **Siemens Aktiengesellschaft Berlin und München, Wittelsbacherplatz 2, D-8000 München 2 (DE)**

(72) Erfinder: **Lüder, Rainer, Dr.- Ing., Kohlstattstrasse 10, D-8024 Oberhaching (DE)**
Erfinder: **Haussmann, Wolfgang, Dipl.- Ing., Untersbergstrasse 90, D-8000 München 90 (DE)**

EP 0 069 856 B2

**Beschreibung**

Die Erfindung betrifft einer Verfahren und eine Anordnung zur Regelung des digitalen Chrominanzsignals eines Farbfernsehempfängers in Abhängigkeit von der Burstsignal-Amplitude und vom Farbkontrast.

In einem digitalen Farbdecoder wird das z. B. mittels eines A/D-Wandlers digitalisierte FBAS (Farbbildaustast-synchronisation)-Signal in Chrominanzsignal (Farbartsignal) und Luminanzsignal (Leuchtdichtesignal) aufgetrennt und decodiert. Die Funktion einer Verstärkungsregelung für die Chrominanzsignale muß ausschließlich durch digitale Schaltungen realisiert werden. Als Referenzwert soll dazu die Amplitude des Burstsignals (Burstreferenzsignal oder Farbsynchronisiersignal) verwendet werden. Um den Farbkontrast beeinglussen zu können, muß ferner die Verstärkung einstellbar veränderbar sein.

Eine digitale Lösung kann in der Weise konzipiert sein, daß ein erster Multiplizierer vorgesehen ist, dessen Multiplikationskoeffizient durch eine Verstärkungsregelung verändert wird, wobei der Koeffizient durch die Amplitude des Burstsignals beeinflußt wird. Es folgt dann ein zweiter Multiplizierer, dessen Koeffizient entsprechend dem gewünschten Farbkontrast einstellbar ist. Nachteil einer solchen Lösung ist der beträchtliche Aufwand für zwei in Kette geschaltete Multiplizierer, die aufgrund der hohen Wortrate eine große Verlustleistung besitzen und bei der Integration einen hohen Flächenbedarf aufweisen.

Aufgabe der Erfindung ist es, hier Abhilfe zu schaffen und ein Verfahren zur Regelung des Chrominanzsignals vorzusehen, das bei geringem Flächenbedarf und geringer Verlustleistung wirtschaftlich günstig mit einem integrierten Schaltkreis realisierbar ist.

Die Aufgabe wird bei einem Verfahren der eingangs genannten Art erfindungsgemäß dadurch gelöst, daß das digitale Chrominanzsignal und das Burstsignal in einem Multiplizierer mit einem Koeffizienten multipliziert werden, daß aus dem Ausgangssignal des Multiplizierers der Mittelwert der Burstamplitude gebildet wird, daß der Mittelwert der Burstamplitude mit einem der gewünschten Farbkontrasteinstellung entsprechenden Sollwert verglichen wird und daß der Koeffizient dem Vergleichsergebnis entsprechend geändert wird. Auf diese Weise gelingt es, mit einem einzigen Multiplizierer auszukommen, der gleichzeitig der Einstellung der Farbsättigung bzw. des Farbkontrastes dient und die Burstamplitude bzw. die Chrominanzsignale zum Ausgleich von abstimmungsbedingten Schwankungen auf Sollwert verstärkt. Ein ähnliches Verfahren und eine ähnliche Anordnung sind in der älteren, EP 51075 (Veröffentlichungstag 12.5.82) beschrieben.

Um bei starkem Rauschen die wirksame Farbsättigung zu verringern, ist es von Vorteil, daß der Mittelwert der Beträge der Burstamplitude mit einem der gewünschten Farbkontrasteinstellung entsprechenden Sollwert verglichen wird.

Zur Verringerung des hardwaremäßigen Aufwandes werden vorzugsweise die einzelnen Farbdifferenzsignale (U, V) des Chrominanzsignals dem Multiplizierer im Zeitmultiplex zugeführt.

Eine Anordnung zur Durchführung des erfindungsgemäßen Verfahrens wird vorteilhafterweise so ausgeführt, daß ein Multiplizierer vorgesehen ist, der eingangsseitig von den digitalen Chrominanzsignalen und dem Burstsignal beaufschlagt ist, daß ein Mittelwertbildner vorgesehen ist, dem jeweils während der Burstzeit die am Ausgang des Multiplizierers anliegenden Signale zuführbar sind, daß ein Vergleicher vorgesehen ist, dessen erster Eingang mit dem Ausgang des Mittelwertbildners verbunden ist und dessen zweiter Eingang mit einem Sollwert beaufschlagbar ist, und daß ein Zähler, dessen Inhalt einem Multiplikationskoeffizienten entspricht, vorgesehen ist, der eingangsseitig mit dem Ausgang des Vergleichers und ausgangsseitig mit einem Eingang des Multiplizierers verbunden ist.

Ausgestaltungen der erfindungsgemäßen Anordnung sind in Unteransprüchen gekennzeichnet.

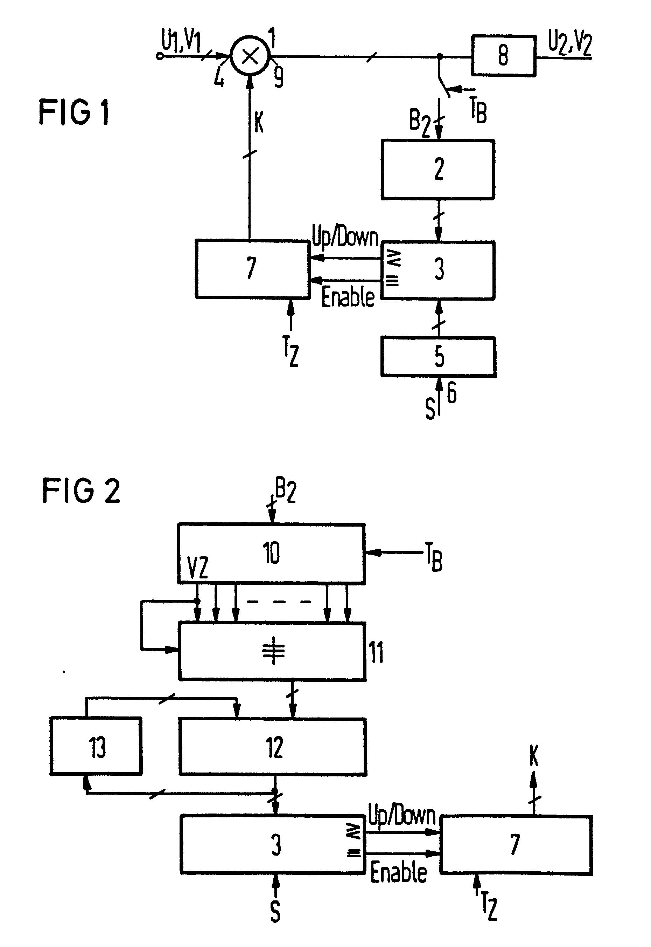

Die Erfindung wird im folgenden anhand der Figuren näher erläutert. Die Figuren 1 und 2 zeigen je ein Ausführungsbeispiel für eine Anordnung zur Durchführung des erfindungsgemäßen Verfahrens.

Das Ausführungsbeispiel nach Fig. 1 weist einen Multiplizierer 1 auf, der die Funktionen der Chrominanzverstärkungsregelung und Einstellung des Farbkontrastes gemeinsam ausführt. Am Dateneingang 4 des Multiplizierers 1 liegen vorteilhafterweise die Abtastwerte der demodulierten Farbdifferenzsignale $U_1$ und $V_1$ im Zeitmultiplex an. Es ist aber auch möglich, am Dateneingang 4 die modulierten Farbdifferenzsignale $F_u$, und $F_v$ anzulegen und ihre Demodulation in einer späteren Verarbeitungsstufe vorzunehmen. Verzichtet man auf das Multiplexen der Farbdifferenzsignale, so ist die erfindungsgemäße Anordnung für jedes Farbdifferenzsignal getrennt vorzusehen.

Die Multiplikation der am Dateneingang 4 anliegenden demodulierten Farbdifferenzsignale $U_1$ und $V_1$ mit einem Koeffizienten $K^* = K \cdot 2^{-n}$, wobei K positiv und ganzzahlig ist und der Faktor $2^{-n}$ zur Skalierung dient und in einfacher Weise, z. B. durch Weglassen bzw. Nichtverarbeiten der niederwertigsten n Bitstellen des Ausgangssignals 9 realisiert werden kann, liefert die Ausgangsfarbdifferenzsignale $U_2$ und $V_2$.

Das demodulierte Burstsignal $B_1$ wird ebenfalls mit dem Koeffizienten $K^*$ multipliziert bzw. verstärkt. Das verstärkte Burstsignal $B_2$ wird während der Burstzeit $T_B$, d. h. während der Zeit, während der das Burstsignal auftritt, dem Eingang eines Mittelwertbildners 2 zugeführt und im Mittelwertbildner 2 über die Burstzeit $T_B$ gemittelt. Dies kann z. B. in einfacher Weise in der Weise geschehen, daß nicht das arithmetische Mittel der Amplituden des Burstsignals $B_2$ ermittelt wird, sondern lediglich die einzelnen Abtastwerte der Amplitude des Signals $B_2$ über die Burstzeit $T_B$ summiert werden.

Im Sollwertregister 5 wird der Sollwert für die aktuelle gewünschte Farbkontrasteinstellung 6 gespeichert, wobei unter Farbkontrast beispielsweise nicht nur die Farbsättigung, sondern eine Verknüpfung von Farbsättigung und Helligkeitskontrast zu verstehen ist. Diese Verknüpfung kann z. B. multiplikativ oder additiv sein.

Im Vergleicher 3, dessen erster Eingang mit dem Ausgang des Mittelwertbildners 2 verbunden ist und dessen zweiter Eingang vom Ausgang des Sollwertregisters 5 beaufschlagt ist, wird z. B. nach jeder Zeilenperiode der im Mittelwertbildner 2 ermittelte Mittelwert für das Burstsignal $B_2$ mit dem im Sollwertregister 5 gespeicherten Sollwert S verglichen.

Der Ausgang des Vergleichers 3 ist mit einem, dem aktuellen Wert des Koeffizienten K beinhaltenden Zähler 7 verbunden. Ist $B_2 > S$, so wird der Koeffizient K um 1 erhöht. Ist B2 > S, so wird K um 1 verkleinert. Bei Gleichheit von $B_2$ und S bleibt der Koeffizient K unverändert. Der Regelvorgang ist also eingeschwungen, wenn $B_2 = S$ ist. Auf diese Weise gelingt es, die Farbdifferenzsignale $U_2$ und $V_2$ am Ausgang des Multiplizierers 1 unabhängig vom Eingangssignal $U_1$ und $V_1$ auf einem bestimmten Pegel zu halten und somit die Funktion einer Chroma-Verstärkungsregelung zu realisieren.

Wir der Sollwert S verändert, kann der Pegel der Farbdifferenzsignale $U_2$ und $V_2$ geändert werden. Somit kann der Farbkontrast durch Änderung der digitalen Sollgröße verändert werden. Da der Koeffizient K sowohl vom Farbkontrast als auch vom Pegel der Eingangsburstamplitude $B_1$ abhängig ist, wird für beide Funktionen nur ein Multiplizierer 1 benötigt. Ein weiterer Vorteil des erfindungsgemäßen Verfahrens besteht darin, daß der durch die Wortbreite des Zählers 7 zwangsläufig begrenzte Koeffizient K (bei 8 Bit Breite kann K z. B. Werte zwischen 0 und 255 annehmen) in beliebiger Weise zwischen Chrominanzverstärkungsregelung und Farbkontrasteinstellung aufgeteilt werden kann.

Bei der erfindungsgemäßen Regelung, bei der während der Burstzeit der Mittelwert der Burstamplitude $B_2$ gebildet und dieser mit dem Sollwert S verglichen wird, ist durch die Änderung von K um ± 1 der Aufwand für die Regelschaltung gering.

Um bei schwachem Eingangssignal $U_1$, $V_1$, bei hohen Rauschpegeln oder beim Auftreten anderer Störgrößen Rauscheffekte zu vermindern und eine Übersteuerung der der erfindungsgemäßen Anordnung nachgeschalteten Stufen zu verhindern, ist es von Vorteil, zwischen der erfindungsgemäßen Anordnung und der nächsten Verarbeitungsstufe einen Begrenzer 8 anzuordnen, der über einem gewünschten Begrenzungspunkt liegende Ausgangsamplituden abschneidet.

Eine weitere Ausgestaltung der erfindungsgemäßen Anordnung und ein Ausführungsbeispiel für einen in einer erfindungsgemäßen Anordnung einsetzbaren Mittelwertbildner zeigt Fig. 2. In der erfindungsgemäßen Anordnung nach Fig. 2 wird der Mittelwert der Beträge der Burstamplitude $B_2$ gebildet. Dadurch werden Rauschanteile im Signal quasi gleichgerichtet und addieren sich zum Burstsignal. Auf diese Weise verringert sich bei starkem Rauschen die wirksame Farbsättigung, da die tatsächliche mittlere Burstamplitude kleiner ist als der Mittelwert, der mit dem Sollwert S verglichen wird. Diese Reduktion der Farbsättigung bei verrauschtem Bild ist subjektiv, d. h. für den Fernsehbetrachter, von Vorteil.

Eine entsprechende Ausführung der Regelschaltung mit Mittelwertbildung der Beträge der Burstamplitude zeigt Fig. 2. Die demodulierten Abtastwerte des Burstsignals werden zunächst im Register 10 gespeichert. Dies kann in der Weise realisiert sein, daß das Register 10 eingangsseitig an den Ausgang 9 des Multiplizierer 1 gekoppelt ist und von einem nur während der Burstzeit $T_B$ aktiven Impuls (Burstgateimpuls) getaktet wird. Der Schaltungsteil 11 besteht aus EXOR-Gliedern und führt durch Verwerten des Vorzeichens VZ der Burstwerte in Register 10 eine Betragsbildung durch. Dies kann in der Weise geschehen, daß jede Bitstelle des Registers 10 den ersten Eingang je eines EXOR-Gatters beaufschlagt, dessen zweiter Eingang jeweils von der Bit-Stelle des Vorzeichenbits VZ beaufschlagt wird. Die Ausgänge der EXOR-Gatter bzw. des Schaltungsteils 11 sind mit dem ersten Eingang eines Addierers 12 verbunden, der somit nur den Betrag der Werte aus dem Register 10 erhält. Der beispielsweise als Volladdierer ausgeführte Addierer 12 addiert die Abtastwerte der Burstamplitude $B_2$ auf und speichert Zwischenergebnisse im Zwischenergebnisregister 13, dessen Eingang mit dem Ausgang des Addierers 12 und dessen Ausgang mit dem zweiten Eingang des Addierers 12 verbunden ist. Durch Weglassen der letzten Bitstellen des Addierers 12 kann ggf. eine Skalierung durchgeführt werden, nach erfolgter Ergebnisverarbeitung wird das Zwischenergebnisregister 13 zurückgestellt. Das am Ausgang des Addierers 12 anliegende Ergebnis der Mittelwertbildung der Beträge wird an den Vergleicher 3 angelegt, welcher das Ergebnis mit dem Sollwert S vergleicht. Der Zähler 7 wird in gleicher Weise wie beim Ausführungsbeispiel nach Fig. 1 vom Ergebnis des Vergleiches (Ist > Soll, Ist < Soll, Ist = Soll) gesteuert. Der Inhalt des Zählers 7 steuert dann als Koeffizient K die Verstärkung des Multiplizierers.

Die Einstellungszeit des Regelvorganges hängt davon ab, ob der im Zähler 7 stehende Koeffizient K nach jeder Zeile, nach jeder n-ten Zeile oder nach jedem Bildwechsel sich um ± 1 ändert. Vorteilhaft ist es, den Koeffizienten K z. B. nach jeder Zeile, d. h. mit der Horizontalfrequenz änderbar zu machen. Dies kann in der Weise realisiert werden, daß der Zähler 7 mit der Horizontalfrequenz getaktet wird, wobei zu beachten ist, daß der Taktimpuls unter Berücksichtigung benötigter Gatterlaufzeiten nach Ende des Burstgateimpulses aktive wird.

Werden die Farbdifferenzsignale $U_1$ und $V_1$ aus dem FBAS-Signal mit einer der zweifachen Farbträgerfrequenz entsprechenden Abtastfrequenz, bei PAL-Norm also z. B. mit 8,867 MHz abgetastet (Abstand zwischen $U_1$-Worten und $V_1$-Worten 112 nsec), so können Multiplizierer 1, Register 10 und Zwischenspeicherregister 13 mit der gleichen Frequenz getaktet werden.

Der Mittelwertbildner 2 bei einem Ausführungsbeispiel nach Fig. 1 kann unter Wegfall des Schaltungsteils 11 entsprechend der aus Register 10, Addierer 12 und Zwischenspeicherregister 13 bestehenden Anordnung der Fig. 2 ausgeführt sein. Als Zähler 7 kann ein handelsüblicher Auf/ Abwärts-Zähler verwendet werden.

Bei Verwendung einer Wortbreite von 8 Bit für die digitalen Chrominanzsignale können alle verwendeten Bausteine z. B. ebenfalls eine Breite von 8 Bit aufweisen.

Da Multiplizierer bei digitalen Signalprozessen zu den Funktionen mit dem größten Flächenbedarf gehören, ist es wichtig, den Multiplizierer 1 in einer, minimalen Flächenbedarf benötigenden Struktur auszuführen. Vorteilhafterweise wird ein nach dem - beispielsweise aus C. Mead und L. Conway, Introduction to VLSI Systems, Reading, Massachusetts: Addison-Wesley, 1980, insbes. S. 76 bekannten - Pipeline-Prinzip arbeitender "Pipeline-Multiplizierer" verwendet. Ein solcher Multiplizierer beruht auf dem Prinzip der sukzessiven Addition mit Stellenverschiebung und Zwischenspeicherung von Teilergebnis und Multiplikator. Nach Anlegen von Multiplikand und Multiplikator liegt das Ergebnis nicht schon nach wenigen Gatterlaufzeiten vor, sondern erst nach n · T, wobei n die Zahl der Additionszyklen darstellt und T die Taktperiode. Der Nachteil der im Multiplizierer entstehenden erhöhten Verzögerungszeit n · T bringt keine Probleme mit sich, da sich lediglich die Gruppenlaufzeit des Prozessors erhöht, der Hardware-Aufwand ist im Vergleich zu herkömmlichen Multiplizieren jedoch bedeutend geringer. Durch das Weglassen bzw. Nichtverarbeiten niederwertiger Bitstellen im Teilergebnis ist auf einfache Weise eine Skalierung des Faktors K zum Multiplikationsfaktor K* möglich.

Das erfindungsgemäße Verfahren kann insbesondere auf nach der PAL-Norm und nach der NTSC-Norm arbeitende Farbfernsehverfahren angewandt werden.

## Patentansprüche

1. Verfahren zur Regelung des digitalen Chrominanzsignals eines Farbfernsehempfängers in Abhängigkeit von der Burstsignal-Amplitude und vom Farbkontrast, dadurch gekennzeichnet, daß das digitale Chrominanzsignal ($U_1$, $V_1$) und das Burstsignal ($B_1$) in einem Multiplizierer (1) mit einem Koeffizienten (K*) multipliziert werden, daß aus dem Ausgangssignal des Multiplizierers (1) der Mittelwert der Burstamplitude gebildet wird, daß der Mittelwert der Burstamplitude mit einem der gewünschten Farbkontrasteinstellung (6) entsprechenden Sollwert (S) verglichen wird, und daß der Koeffizient (K*) dem Vergleichsergebnis entsprechend geändert wird.

2. Verfahren nach Anspruch 1, dadurch gekennzeichnet, daß der Mittelwert der Beträge der Burstamplitude mit einem der gewünschten Farbkontrasteinstellung (6) entsprechenden Sollwert (S) verglichen wird.

3. Verfahren nach Anspruch 1 oder 2, dadurch gekennzeichnet, daß die einzelnen Farbdifferenzsignale ($U_1$, $V_1$) des Chrominanzsignales dem Multiplizierer (1) im Zeitmultiplex zugeführt werden.

4. Anordnung zur Durchführung des Verfahrens nach einem der Ansprüche 1 bis 3, dadurch gekennzichnet, daß ein Multiplizierer (1) vorgesehen ist, der eingangsseitig von den digitalen Chrominanzsignalen ($U_1$, $V_1$) und dem Burstsignal ($B_1$) beaufschlagt ist, daß ein Mittelwertbildner (2) vorgesehen ist dem jeweils während der Burstzeit ($T_B$) die am Ausgang (9) des Multiplizierers (1) anliegenden Signale zuführbar sind, daß ein Vergleicher (3) vorgesehen ist, dessen erster Eingang mit dem Ausgang des Mittelwertbildners (2) verbunden ist und dessen zweiter Eingang mit einem Sollwert (S) beaufschlagt ist, und daß ein Zähler (7), dessen Inhalt einem Multiplikationskoeffizienten (K) entspricht, vorgesehen ist, der eingangsseitig mit dem Ausgang des Vergleichers (3) und ausgangsseitig mit einem Eingang des Multiplizierers (1) verbunden ist.

5. Anordnung nach Anspruch 4, dadurch gekennzeichnet, daß zur Mittelwertbildung ein zur Burstzeit ($T_B$) getaktetes Register (10), das eingangsseitig mit dem Ausgang (9) des Multiplizierers (1) verbunden ist, und ein Addierer (12), dessen erster Eingang mit dem Ausgang des Registers (10) verbunden ist, vorgesehen sind, wobei der zweite Eingang des Addierers (12) mit dem Ausgang eines Zwischenergebnisregisters (13) und der Ausgang des Addierers (12) einerseits mit dem Eingang des Zwischenergebnisregisters (13) und andererseits mit einem Eingang des Vergleichers (3) verbunden ist.

6. Anordnung nach Anspruch 4 oder 5, dadurch gekennzeichnet, daß das zur Burstzeit ($T_B$) getaktete Register (10) über EXOR-Glieder (11) mit dem ersten Eingang des Addierers (12) verbunden ist.

7. Anordnung nach einem der Ansprüche 4 bis 6, dadurch gekennzeichnet, daß als Multiplizierer (1) ein nach dem Pipeline-Prinzip arbeiten- der Multiplizierer vorgesehen ist.

8. Anordnung nach einem der Ansprüche 4 bis 7, dadurch gekennzeichnet, daß ein Begrenzer (8) vorgesehen ist, dem das geregelte Chrominanzsignal ($U_2$, $V_2$) zuführbar ist.

## Claims

1. A process for controlling the digital chrominance signal of a colour television receiver in dependence upon the burst signal amplitude and the colour contrast, characterised in that the digital chrominance signal ($U_1$, $V_1$) and the burst signal ($B_1$) are multiplied with a coefficient ($K^*$) in a multiplier (1), that the mean value of the burst amplitude is formed from the output signal of the multiplier (1), that the mean value of the burst amplitude is compared with a theoretical value (S) which corresponds to the required colour contrast adjustment (6), and that the coefficient ($K^*$) is changed in accordance with the result of the comparison.

2. A process as claimed in Claim 1, characterised in that the mean value of the burst amplitude levels is compared with a theoretical value (S) which corresponds to the required colour contrast adjustment (6).

3. A process as claimed in Claim 1 or 2, characterised in that the individual colour difference signals ($U_1$, $V_1$) of the chrominance signal are fed to the multiplier (1) in the t.d.m. mode.

4. An arrangement for implementing the process as claimed in one of Claims 1 to 3, characterised in that there is provided a multiplier (1) triggered at the input end by the digital chrominance signal ($U_1$, $V_1$) and the burst signal ($B_1$), that there is provided a mean value forming stage (2), to which signals which are connected to the output (9) of the multiplier (1) can be respectively supplied during the burst time ($T_B$), that there is provided a comparator (3), whose first input is connected to the output of the mean value forming stage (2) and whose second input is supplied with a theoretical value (S), and that there is provided a counter (7) whose content corresponds to a multiplication coefficient (k) and which at the input end is connected to the output of the comparator (3) and at the output end to an input of the multiplier (1).

5. An arrangement as claimed in Claim 4, characterised in that in order to form the mean value, there are provided a register (10) pulse-driven at the burst time ($T_B$) and connected at the input end to the output (9) of the multiplier (1), and an adder (12) whose first input is connected to the output of the register (10), where the second input of the adder (12) is connected to the output of the intermediate result register (13) and the output of the adder (12) is connected to the input of the intermediate result register (13) on the one hand and to the one input of the comparator (3) on the other hand.

6. An arrangement as claimed in Claim 4 or 5, characterised in that the register (10) which is pulse-driven at the burst time ($T_B$) is connected to the first input of the adder (12) by means of EXOR elements (11).

7. An arrangement as claimed in one of Claims 4 to 6, characterized in that a multiplier, which operates in accordance with the pipeline principle, is provided as multiplier (1).

8. An arrangement as claimed in one of Claims 4 to 7, characterised in that a restrictor (8) is provided to which the controlled chrominance signal ($U_2$, $V_2$ can be supplied.

## Revendications

1. Procédé pour régler le signal de chrominance numérique d'un récepteur de télévision en couleurs en fonction de l'amplitude de la salve de référence et du contraste de couleurs, caractérisé par le fait que le signal de chrominance numérique ($U_1$, $V_1$) et la salve de référence ($B_1$) sont multipliés dans un multiplicateur (1) par un facteur ($K^*$), que la valeur moyenne de l'amplitude de la salve de référence est formée à partir du signal de sortie de l'amplificateur (1), que la valeur moyenne de l'amplitude de la salve de référence est comparée à une valeur de consigne (S) correspondant au réglage désiré du contraste de couleurs (6) et que le coefficient ($K^*$) est modifié en fonction du résultat de la comparaison.

2. Procédé suivant la revendication 1, caractérisé par le fait que la moyenne des valeurs de l'amplitude de la salve de référence est comparée à une valeur de consigne (S) correspondant au réglage désiré du contraste de couleurs (6).

3. Procédé suivant la revendication 1 ou 2, caractérisé par le fait que les différents signaux de différence de couleurs ($U_1$, $V_1$) du signal de chrominance sont envoyés selon un multiplexage temporel au multiplicateur (1).

4. Dispositif pour la mise en oeuvre du procédé suivant l'une des revendications 1 à 3, caractérisé par le fait qu'il est prévu un multiplicateur (1) qui est chargé, sur son côté entrée, par les signaux de chrominance numériques ($U_1$, $V_1$) et par la salve de référence ($V_1$), qu'il est prévu un dispositif (2) de formation de la valeur moyenne auquel les signaux présent à la sortie (9) du multiplicateur (1) peuvent être envoyés pendant la durée ($T_B$) de la salve de référence, qu'il est prévu un comparateur (3) dont la première entrée est reliée à la sortie du dispositif (2) de formation de la différence et dont la seconde entrée est chargée par une valeur de consigne (s), et qu'il est prévu un compteur (7), dont le contenu correspond à un facteur multiplicatif (k) et qui est relié, du côté entrée, à la sortie du comparateur (3) et, du côté sortie, à une entrée du multiplificateur (1).

5. Dispositif suivant la revendication 4, caractérisé par le fait que pour la formation de la valeur moyenne il est prévu un registre (10) qui est commandé de façon cadencée pendant la durée ($T_B$) de la salve de référence et qui est relié du côté entrée à la sortie (9) du multiplificateur (1), et un additionneur (12) dont la première entrée est reliée à la sortie du registre (6), la seconde entrée de l'additionneur (12) étant reliée à la sortie d'un registre de résultats intermédiaires (13) et la sortie de l'additionneur (12) étant reliée d'une part à l'entrée du registre de résultats intermédiaires (13) et d'autre part à une entrée du comparateur (3).

6. Dispositif suivant la revendication 4 ou 5, caractérisé par le fait que le registre (10) est commandé pendant la durée ($T_B$) de la salve de référence et est relié par l'intermédiaire d'organes OU-Exclusif (11) à la première entrée de l'additionneur (12).

7. Dispositif suivant l'une des revendications 4 à 6, caractérisé par le fait qu'il est prévu en tant que multiplicateur (1), un multiplificateur fonctionnant selon le principe pipeline.

8. Dispositif suivant l'une des revendications 4 à 7, caractérisé par le fait qu'il est prévu un limiteur (8) auquel est envoyé le signal de chrominance réglé ($U_2$, $V_2$).

FIG 1

FIG 2